(19) Europäisches Patentamt
European Patent Office
Office européen des brevets

(11) **EP 1 462 415 B1**

(12) **EUROPEAN PATENT SPECIFICATION**

(45) Date of publication and mention
of the grant of the patent:
**04.03.2009 Bulletin 2009/10**

(51) Int Cl.:
*C01B 31/02* (2006.01)    *C01B 31/06* (2006.01)

(21) Application number: **04007239.9**

(22) Date of filing: **25.03.2004**

(54) **Production process of nano carbon material**

Verfahren zur Herstellung eines Nanokohlenstoffmaterials

Procédé de production de matériau en carbone de taille nanométrique

(84) Designated Contracting States:
**AT BE BG CH CY CZ DE DK EE ES FI FR GB GR HU IE IT LI LU MC NL PL PT RO SE SI SK TR**

(30) Priority: **26.03.2003  JP 2003086005**

(43) Date of publication of application:
**29.09.2004  Bulletin 2004/40**

(73) Proprietor: **CANON KABUSHIKI KAISHA Tokyo (JP)**

(72) Inventors:
• **Kawakami, Soichiro**
**Tokyo (JP)**

• **Inoue, Katsuhiko**
**Tokyo (JP)**
• **Sano, Hitomi**
**Tokyo (JP)**
• **Suzuki, Nobuyuki**
**Tokyo (JP)**

(74) Representative: **TBK-Patent**
**Bavariaring 4-6**
**80336 München (DE)**

(56) References cited:
**EP-A- 1 300 363      EP-A- 1 300 364**
**EP-A- 1 440 932      WO-A-02/079082**
**WO-A-20/04007361**

## Description

BACKGROUND OF THE INVENTION

Field of the Invention

The present invention relates to a production process of a nano carbon material, and more particularly to a production process, by which fullerene, carbon nanotubes and diamond that are typical examples of nano carbon materials can be mass-produced using a cheap raw material and a simple production apparatus.

Related Background Art

Since fullerene of a soccer ball-like molecule composed of 60 carbon atoms was found out by H. W. Kroto, R. E. Smalley and R. F. Curl in 1985, and a carbon nanotube formed into a tube by winding a graphene sheet was found out by Iijima in 1991, researches on synthetic processes of various nano carbon materials and their applied researches have been vigorously conducted.

EP 1300364 discloses a method for producing nano carbon materials, which comprises the step of contacting an aromatic compound-containing starting material with a supercritical fluid in the presence of a transition metal element-containing catalyst at a temperature in a range from 350°C to 800°C and at a pressure range of from 3 to 50 MPa.

The carbon nanotube is investigated about its applications to electrode materials of display devices such as FED (field emission display), electrode materials of lithium secondary batteries, hydrogen storage materials of hydrogen storage systems, and the like because it is excellent in performance of field emission, stores and emits lithium in an electrochemical reaction, and is excellent in capacity for hydrogen storage.

As for production processes of the carbon nanotube, have heretofore been known a process by means of arc discharge under a gas atmosphere containing a carbon raw material such as a hydrocarbon, a process by a laser evaporation process, in which graphite as a target is irradiated with a laser beam to evaporate the graphite, thereby forming a carbon nanotube, a process by thermally decomposing a gas as a carbon raw material, such as acetylene, on a substrate, on which a catalyst composed of metal cobalt or metal nickel has been arranged, and the like.

For example, Japanese Patent Application Laid-Open Nos. H6-157016 and 2000-95509 propose a production process by means of arc discharge, Japanese Patent Application Laid-Open No. H9-188509 proposes a production process by means of highfrequency plasma, Japanese Patent Application Laid-Open No. H10-273308 proposes a production process by the laser evaporation method, and Japanese Patent Application Laid-Open No. 2000-86217 proposes a production process by the thermal decomposition.

However, the conventional production processes of nano carbon materials typified by carbon nanotubes, carbon nanofibers and the like involve problems that production cost of a nano carbon material becomes high because costs of a raw material and a production apparatus are high, and difficulty is encountered on mass production.

In Carbon, Vol. 36, No. 7-8, pp. 937-942, 1998, it is reported that filament-like carbon is produced by a hydrothermal synthetic reaction at 700°C and 100 MPa for 150 hours using paraformaldehyde as a raw material. In Journal of Materials Research Society, Vol. 15, No. 12, pp. 2591-2594, 2000, it is reported that a multi-layer carbon nanotube is obtained by using polyethylene as a raw material in the presence of Ni under hydrothermal reaction conditions of 700 to 800°C and 60 to 100 MPa. In Journal of American Chemical Society, Vol. 123, No. 4, pp. 741-742, 2001, it is reported that a multi-layer carbon nanotube is obtained by using amorphous carbon as a raw material under hydrothermal reaction conditions of 800°C, 100 MPa and 48 hours.

In all the above-described three documents, however, the reaction took place in a capsule made of gold, and it is not reported that a nano carbon material is produced under conditions of 90 MPa or lower.

In order to mass-produce a nano carbon material at low cost, it is thus desired that a synthesis be conducted by using a cheaper raw material under conditions of a lower temperature and a lower pressure.

In Carbon, Vol. 40, pp. 2961-2973, 2002, a carbon nanotube of a multi-layer structure is obtained by placing benzene as a raw material and a nickel-iron alloy as a catalyst in an autoclave and conducting a reaction at a temperature of 480°C under a pressure of 15 MPa.

In this document, however, the ratio of the weight of a nano carbon material produced to the weight of the catalyst in the reaction for 12 hours is as low as 4.2, and thus it takes a long time to produce the nano carbon material. As apparent from the result of Raman spectrometry as to the nano carbon material thus obtained, in relative intensity between a peak called G band at about 1590 $cm^{-1}$, that is attributable to lattice vibration within a six-membered ring network of carbon atoms, and a peak called D band at about 1350 $cm^{-1}$, that is attributable to lattice defect of carbon, the peak intensity at about 1350 $cm^{-1}$ is stronger. This nano carbon material thus contains many lattice defects. There has thus been a demand for development of a process for synthesizing a good-quality nano carbon material with few lattice defects in a short synthetic reaction time.

On pages 38 to 41 of "Kogyo Zairyo (Industrial Materials)" (2003), Vol. 51, No. 1, it is reported that a single-layer carbon nanotube is obtained by using ethanol as a raw material on a Fe-Co catalyst at a temperature of 600 to 900°C in accordance with a CVD method. In this method, the yield is low, and it requires a temperature of at least 800°C to obtain a high-purity carbon nanotube. The method also seems to involve a problem that growth of amorphous carbon increases even at a temperature of 800°C if the amount of ethanol increases. There has thus been a further demand for development of a production process for obtaining a high-purity carbon nanotube at a high yield.

As described above, the nano carbon materials are expected to widely apply to electrode materials of secondary batteries, field electron emission sources for devices such as FED, carbon materials for carrying a catalyst in fuel cells, hydrogen storage materials of hydrogen storage systems, and the like. It is thus greatly expected to develop techniques for producing these nano carbon materials at low cost.

Diamond has not only a value as gem, but also a very high industrial value as an abrasive or the like because its hardness is high. Various synthetic processes have been thus attempted.

In Nature, 176, 51 (1955), it is described that diamond powder is synthesized by using graphite and a metal catalyst under conditions of temperature and pressure as high as 2,000°C and 30,000 atm. U.S. Patent Nos. 3,030,187 and 3,030,188 propose a process for synthesizing diamond from a vapor phase. In J. Cryst. Growth, 52, 219 (1981), it was found that diamond is grown on other substrates than diamond by a CVD (chemical vapor deposition) method by decomposition of methane. In Jap. J. Appl. Phys., 21, L183 (1982), it was also found that a thin diamond film is formed by using a mixed gas of methane and hydrogen and a heated filament. Since the above-described findings, raw materials other than methane and also plasma decomposition methods by discharge with RF (radio-frequency wave), microwave or DC (direct current) have been investigated.

However, the synthesizing process of diamond under high-temperature and high-pressure conditions requires a large-scale apparatus. The vapor phase decomposition method is suitable for synthesis of a thin diamond film because a decomposition reaction is conducted under atmospheric pressure or lower, preferably reduced pressure. However, it is unsuitable for production of diamond powder high in industrial utility value.

There has thus been a demand for development of a process for cheaply synthesizing diamond powder.

Since fullerene of $C_{60}$ was found, $C_{70}$ composed of 70 carbon atoms, $C_{76}$ composed of 76 carbon atoms, $C_{78}$ composed of 78 carbon atoms, $C_{82}$ composed of 82 carbon atoms, $C_{84}$ composed of 84 carbon atoms, $C_{86}$ composed of 86 carbon atoms, $C_{88}$ composed of 88 carbon atoms, $C_{90}$ composed of 90 carbon atoms, $C_{94}$ composed of 94 carbon atoms, $C_{96}$ composed of 96 carbon atoms, and the like have been successively found. Fullerene containing a metal element therein has been further found, and its applied researches to functional devices, medicines and the like have been vigorously conducted.

As for production processes of fullerene, have been developed a laser evaporation process in a heated flow gas to extract fullerene from soot obtained by irradiating graphite with a laser beam in an argon gas or helium gas stream heated at a high temperature of about 1,200°C, a resistance heating process to extract fullerence from soot obtained by resistance heating of a graphite rod in a helium gas, an arc discharge process to extract fullerene from carbon soot obtained by causing arc discharge between two graphite electrodes, a high frequency induction heating process to extract fullerene from soot obtained by causing an eddy current to flow through raw graphite by high frequency induction to heat and evaporate the graphite, a combustion process to extract fullerene from soot obtained by diluting a mixed gas of benzene and oxygen with argon and burning the diluted gas, and the like.

Japanese Patent Application Laid-Open No. H5-186865 proposes a production process of carbon cluster by subjecting a pair of electrodes composed of a carbon rod and a metal rod arranged in a container filled with an inert gas to arc discharge or resistance heating. Japanese Patent Application Laid-Open Nos. H6-56414 and H6-32606 propose a production process to isolate fullerene from a solid obtained by feeding an aromatic compound into heated plasma generated.

In the conventional production processes of fullerene, however, the yield is low, and the resultant fullerene greatly contains impurities. There has thus been a demand for development of a production process by which high-purity fullerene is obtained.

SUMMARY OF THE INVENTION

The present invention has been made with the foregoing circumstances in view to provide a process for cheaply producing a nano carbon material such as a carbon nanotube, diamond or fullerene, which is expected to apply to various industrial fields.

According to the present invention, there is thus provided a process for producing a nano carbon material, which comprises the steps of mixing at least one compound composed of a carbon element and a hydrogen element selected from Group A consisting of linear saturated hydrocarbons, linear unsaturated hydrocarbons, cyclic saturated hydrocarbons, aromatic hydrocarbons, alcohols and ethers with at least one oxygen-element-containing substance selected from Group B consisting of methanol, ethanol, acetone, acetaldehyde, ethylene oxide, ethylene glycol, formaldehyde, water, hydrogen peroxide, oxygen and nitrous oxide; and causing the mixture to coexist with a supercritical fluid or subcritical fluid within a temperature range of from 300 to 800°C under a pressure of from 2 to 60 MPa.

According to the present invention, there is also provided a process for producing a nano carbon material, which comprises the steps of mixing at least one compound composed of a carbon element and a hydrogen element selected from Group A consisting of linear saturated hydrocarbons, linear unsaturated hydrocarbons, cyclic saturated hydrocarbons, aromatic hydrocarbons, alcohols and ethers with at least one oxygen-element-containing substance selected from Group B consisting of methanol, ethanol, acetone, acetaldehyde, ethylene oxide, ethylene glycol, formaldehyde, water, hydrogen peroxide, oxygen and nitrous oxide; and causing the mixture to coexist with a supercritical fluid or subcritical fluid in the presence of a transition metal or transition metal compound within a temperature range of from 300 to 800°C under a pressure of from 2 to 60 MPa, thereby producing a carbon nanotube.

According to the present invention, there is further provided a process for producing a nano carbon material, which comprises the steps of mixing at least one compound composed of a carbon element and a hydrogen element selected from Group A consisting of linear saturated hydrocarbons, linear unsaturated hydrocarbons, cyclic saturated hydrocarbons, aromatic hydrocarbons, alcohols and ethers with at least one oxygen-element-containing substance selected from Group B consisting of methanol, ethanol, acetone, acetaldehyde, ethylene oxide, ethylene glycol, formaldehyde, water, hydrogen peroxide, oxygen and nitrous oxide; and causing the mixture to coexist with a supercritical fluid or subcritical fluid in the presence of a substance selected from the group consisting of silicon, silicon carbide, cubic system boron nitride, germanium, zinc blende structure compounds, chalopyrite structure compounds, wurtrite structure compounds, molybdenum, tungsten and copper within a temperature range of from 400 to 800°C under a pressure of from 2 to 60 MPa, thereby producing diamond.

According to the present invention, there is still further provided a process for producing a nano carbon material, which comprises the steps of mixing at least one compound composed of a carbon element and a hydrogen element selected from Group A consisting of linear saturated hydrocarbons, linear unsaturated hydrocarbons, cyclic saturated hydrocarbons, aromatic hydrocarbons, alcohols and ethers with at least one oxygen-element-containing substance selected from Group B consisting of methanol, ethanol, acetone, acetaldehyde, ethylene oxide, ethylene glycol, formaldehyde, water, hydrogen peroxide, oxygen and nitrous oxide; and causing the mixture to coexist with a supercritical fluid or subcritical fluid within a temperature range of from 300 to 600°C under a pressure of from 2 to 60 MPa, thereby producing fullerene.

In the above-described production processes, a substance forming the supercritical fluid or subcritical fluid may be composed of at least one selected from the group consisting of linear saturated hydrocarbons, linear unsaturated hydrocarbons, cyclic saturated hydrocarbons, aromatic hydrocarbons, alcohols, ethers, acetone, acetaldehyde, ethylene oxide, ethylene glycol, formaldehyde, water, hydrogen peroxide, nitrous oxide, helium, argon, nitrogen, hydrogen, carbon monoxide and carbon dioxide, and may become a supercritical fluid or subcritical fluid within the above-described temperature and pressure ranges.

The transition metal compound may be at least one compound selected from the group consisting of transition metal sulfides, transition metal carbides, organic transition metal compounds, transition metal nitrides, transition metal salts and transition metal oxides, and the transition metal element of the transition metal or transition metal compound may be at least one element selected from the group consisting of nickel, cobalt, iron, copper, silver, chromium, tungsten, molybdenum, titanium, ruthenium, rhodium and palladium.

The production processes may each further comprise the step of controlling the concentration of a gas monitored during the synthetic reaction of the nano carbon material so as to fall within a fixed range.

A ratio of the oxygen element to the carbon element in the mixture of the compound selected from the Group A and the substance selected from the Group B may fall within a range of from 0.1 to 1.0.

BRIEF DESCRIPTION OF THE DRAWINGS

Fig. 1 is a flow chart illustrating an exemplary production process of a nano carbon material according to the present invention.
Fig. 2 schematically illustrates an exemplary production apparatus used in the production process of a nano carbon material according to the present invention.
Fig. 3 schematically illustrates an exemplary continuous production apparatus used in the production process of a nano carbon material according to the present invention.

DETAILED DESCRIPTION OF THE PREFERRED EMBODIMENTS

In the synthesis of a nano carbon material such as diamond, fullerene or carbon nanotube according to the conventional CVD method, a desired kind of nano carbon material has been unable to be selectively provided in a great amount from the following reasons.

Examples of the production process of the nano carbon material include a laser evaporation process, an arc discharge process, a high frequency discharge process and a combustion process. In a synthetic process of fullerene according to the laser evaporation process, arc discharge process or high frequency discharge process, carbon is evaporated under reduced pressure, or a hydrocarbon as a raw material of carbon is decomposed, thereby colliding a gaseous reaction intermediate flown as atomic carbon or plasma hydrocarbon with a substrate provided on an inner wall of a reaction vessel or within the reaction vessel to deposit soot. Fullerene is formed in the soot. The energy of the reaction intermediate which has become the atomic carbon or plasma hydrocarbon is not uniform, but has a distribution with a certain energy range. In the reaction intermediate composed of the plasma hydrocarbon, many kinds of active species are formed according to the number of carbon atoms. For example, $CH_3$, $CH_2$, CH, H and C are formed by decomposition of $CH_4$.

Further, the mean free path of the reaction intermediate varies according to the pressure of its atmosphere, and various kinds of reaction intermediates are additionally formed by mutual collision up to the collision with the substrate. Accordingly, the kinds and amounts of products in the deposit vary according to the kinds of the reaction intermediates, energy possessed by them, their densities and flying distances, and the temperature upon deposition.

In a synthetic process of fullerene according to the combustion process, fullerene is formed in soot obtained by incomplete combustion of a mixed gas of a compound such as benzene as a raw material and oxygen. The combustion reaction is completed in a moment. However, heat is generated upon the combustion, and so the reaction temperature cannot be evenly controlled. Therefore, different kinds of products are provided in a mixed state according to the distribution of the reaction temperature.

Even in either synthesis of a carbon nanotube or synthesis of diamond by the CVD method, a problem that the purity of the resultant deposit is low has arisen from the same reasons as in the synthesis of fullerene.

In order to solve the above-described problems, the present inventors have found that when a supercritical fluid is caused to exist within a closed reaction vessel and the temperature is controlled, the temperatures of a raw material within the reaction vessel, a reaction intermediate produced from the raw material, and the like can be made even, and a high-purity nano carbon material can be synthesized. In addition, although the raw material becomes an active state under conditions that the raw material becomes a supercritical state, it is not so active as active species of the reaction intermediates formed by the conventional plasma CVD process, and many active species are not formed. This is considered a reason why the high-purity nano carbon material is provided.

It has also been found that when a part of contents in the reaction vessel are sampled out to monitor a component, thereby controlling the feed and discharge of the raw material so as to make the concentration of the monitoring component fixed, the equilibrium reaction can be shifted toward deposition of a nano carbon material.

It has been further found that when a compound such as methanol, which generates oxygen, atomic oxygen and atomic hydrogen, by which such a reaction that a strong carbon-carbon bond in a nano carbon material formed is left and a weak carbon-carbon bond is severed is caused, is mixed to conduct a reaction, a desired nano carbon material can be provided. In addition, it has also been found that when temperature conditions, pressure conditions, a ratio of an oxygen element or hydrogen element to a compound that becomes a raw material, and the like are set so as to leave a desired carbon-carbon bond, desired fullerene, carbon nanotube or diamond can be synthesized at a high purity.

The present invention relates to a production process of a nano carbon material, which comprises the steps of mixing at least one compound composed of a carbon element and a hydrogen element selected from Group A consisting of linear saturated hydrocarbons, linear unsaturated hydrocarbons, cyclic saturated hydrocarbons, aromatic hydrocarbons, alcohols and ethers with at least one oxygen-element-containing substance selected from Group B consisting of methanol, ethanol, acetone, acetaldehyde, ethylene oxide, ethylene glycol, formaldehyde, water, hydrogen peroxide, oxygen and nitrous oxide; and causing the mixture to coexist with a supercritical fluid or subcritical fluid within a temperature range of from 300 to 800°C under a pressure of from 2 to 60 MPa.

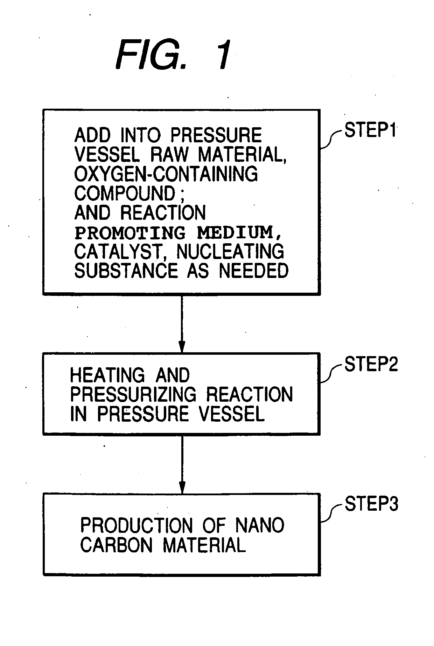

A flow chart of an exemplary production process according to the present invention is illustrated in Fig. 1. In Fig. 1, Step 1 is a preparatory step of mixing a raw material with an oxygen-element-containing compound and adding a catalyst, a substance (nucleating substance), which becomes a nucleus of growth of a nano carbon crystal, and a reaction promoting medium (as a medium for promoting the reaction) into a pressure reaction vessel as needed. The pressure reaction vessel is desirably evacuated to vacuum to deoxygenate as needed. Step 2 is a step of heating and pressurizing these contents within the pressure reaction vessel to cause the raw material and/or the oxygen-element-containing compound and reaction promoting medium to become a supercritical fluid or subcritical fluid and reacting the raw material for a specified period of time. Step 3 is a step of separating a unreacted raw material through Step 2 to obtain a nano carbon material. Thereafter, the nano carbon material obtained in Step 3 may be heat-treated at 400 to 2,000°C under an inert gas atmosphere, or a remaining catalyst or the like may be removed to purify the nano carbon material.

The raw material is at least one compound composed of a carbon element and a hydrogen element selected from Group A consisting of linear saturated hydrocarbons, linear unsaturated hydrocarbons, cyclic saturated hydrocarbons, aromatic hydrocarbons, alcohols and ethers. Among these raw materials, alcohols and ethers are desirable raw materials in that they have an oxygen element in their molecules, and this oxygen element severs a weak carbon-carbon bond during the reaction to form carbon dioxide and/or the like, thereby making easy to selectively form a nano carbon material. However, these raw materials are raw materials by which the yield cannot be made high. The oxygen-element-containing compound is a substance selected from Group B consisting of methanol, ethanol, acetone, acetaldehyde, ethylene oxide, ethylene glycol, formaldehyde, water, hydrogen peroxide, oxygen and nitrous oxide and takes the role of selectively growing the carbon-carbon bond of a desired nano carbon material and removing impurities secondarily produced, such as amorphous carbon, as carbon dioxide or hydrocarbons.

As the reaction promoting medium for promoting the reaction or making the reaction even, may be used at least one selected from helium, argon, nitrogen, hydrogen, carbon monoxide and carbon dioxide. Some of the above-described oxygen-containing compounds and reaction promoting media may become a part of the raw material for the nano carbon material in some cases. When the nano carbon material synthesized is a carbon nanotube, a transition metal or transition metal compound is used as a catalyst. When the nano carbon material synthesized is diamond, silicon or the like is used as a nucleating substance for forming a nucleus of a diamond crystal. The heating temperature is preferably within a range of from 300 to 600°C in the case where the nano carbon material synthesized is fullerene, from 300 to 800°C in the case of a carbon nanotube, or from 400 to 800°C in the case of diamond. The more preferable heating temperature range is within a range of from 300 to 500°C in the case of fullerene, from 400 to 800°C in the case of a carbon nanotube, or from 600 to 800°C in the case of diamond. Optimum conditions vary according to the raw material and oxygen-element-containing compound used, the reaction temperature, the reaction pressure, the reaction partial pressure, the nano carbon material'synthesized, and the like. However, the molar ratio of the oxygen element to the carbon element in the mixture of the raw material and the oxygen-element-containing compound preferably falls within a range of from 0.1 to 1.0, or the molar ratio of the oxygen-element-containing compound to the raw material preferably falls within a range of from 0.1 to 6.0.

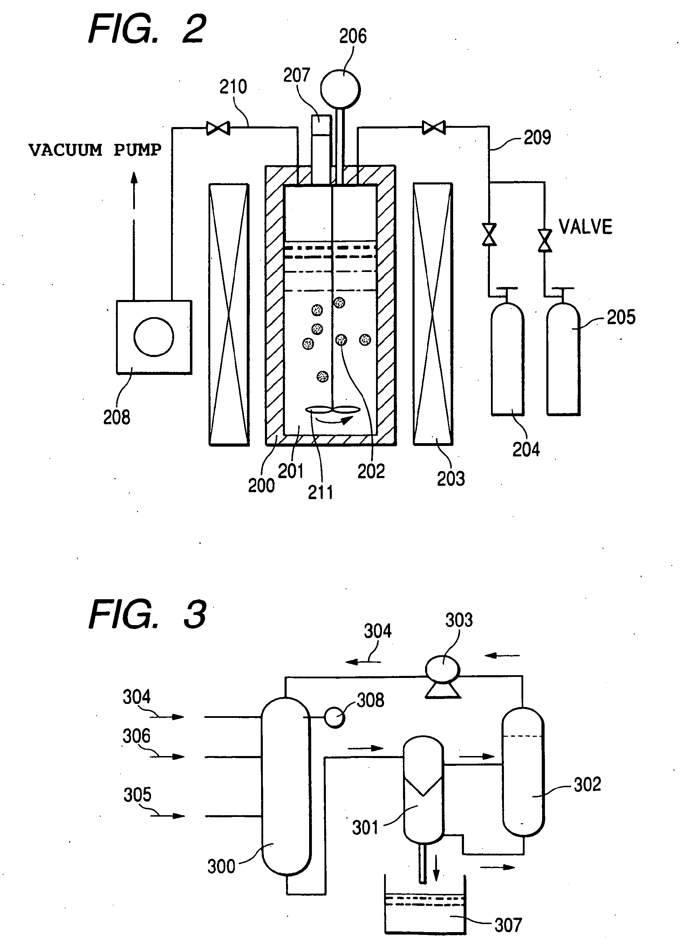

As an example of a reaction apparatus for preparing a nano carbon material according to the above-described production process, is used a high-temperature high-pressure reaction vessel 200 equipped with a pressure guage 206, a heater 203 and a safety valve 207 as illustrated in Fig. 2. In Fig. 2, reference numeral 201 indicates a mixture of a raw material and an oxygen-element-containing compound and additionally a reaction promoting medium such as carbon dioxide, 202 a catalyst or nucleating substance, 204 a raw material storing container, 205 an oxygen-element-containing compound storing container, 208 an vacuum pump, 209 a feed pipe for the raw material or oxygen-element-containing compound, 210 an exhaust pipe, and 211 a stirring mechanism.

The material of at least an inner wall of the high-temperature high-pressure reaction vessel 200 is desirably composed of preferably stainless steel, more preferably a Ni-Mo alloy from the viewpoint of corrosion resistance. In order to enhance a yield from the raw material, it is more preferable that a circulating type reaction vessel (not illustrated), in which a desired reaction product (nano carbon material) is separated from a reaction mixture containing an unreacted raw material, and the raw material is returned to the reaction vessel, be used.

In the present invention, the interior of the high-temperature high-pressure reaction vessel 200, in which the catalyst or nucleating substance 202 has been placed, is evacuated by the vacuum pump 208 to deoxygenate, the raw material and oxygen-element-containing compound are respectively fed in specified amounts from the raw material storing container 204 and the oxygen-element-containing compound storing container 205 to the high-temperature high-pressure reaction vessel, and a specified amount of the reaction promoting medium such as carbon dioxide is fed from a reaction promoting medium storing container (not illustrated) as needed. Thereafter, the contents are heated to a specified temperature and a specified pressure exceeding a critical point, at which the raw material or oxygen-element-containing compound, or the reaction promoting medium becomes a supercritical fluid, and the stirring mechanism 211 is caused to function in the presence of the catalyst or nucleating substance, as needed, to bring the raw material into uniform contact with the catalyst or nucleating substance 202, thereby synthesize a nano carbon material from the raw material.

Fig. 3 schematically illustrates an example of a production apparatus for continuously producing a nano carbon material according to the process of the present invention. In Fig. 3, reference numeral 300 indicates a high-temperature high-pressure reaction vessel, 301 a product (nano carbon material formed) separator, 302 a raw material recovering and purifying tank, 303 a compressor, 304 a feed raw material, 305 a feed catalyst or nucleating substance, 306 a feed oxygen-element-containing compound, 307 a product (nano carbon material), and 308 a monitor for a gas composition within the reaction vessel. In the present invention, the raw material 304, oxygen-element-containing compound 306 and catalyst or nucleating substance 305, and optionally a reaction promoting medium (not illustrated) such as carbon dioxide are first fed to the high-temperature high-pressure reaction vessel 300, which has been fully deoxygenated, to conduct a reaction for a specified period of time under conditions of temperature and pressure, under which the raw material or oxygen-element-containing compound, or the reaction promoting medium forms a supercritical fluid, and the mixture of the product and the unreacted raw material is then sent to the product separator to separate the product (nano carbon material) 307 from the unreacted raw material 304. The unreacted raw material is sent to the raw material recovering and purifying tank 302, the unreacted raw material 304 recovered is sent to the high-temperature high-pressure reaction vessel 300 through the compressor 303. The gas composition within the reaction vessel is successively monitored by the monitor 308 to control the feeding of the raw material 304, the catalyst or nucleating substance 305, the oxygen-element-containing compound 306 and optionally the reaction promoting medium such as carbon dioxide, thereby conducting the reaction under the specified conditions to produce a nano carbon material.

[Hydrocarbon as raw material]

In the present invention, a preferable specific linear saturated hydrocarbon is preferably at least one compound selected from the group consisting of methane, ethane, propane, butane, pentane, hexane, heptane, octane, nonane, decane, undecane, dodecane, tridecane, tetradecane, pentadecane, hexadecane, heptadecane, octadecane, nonadecane, eicosane, isobutane, isopentane, dimethylbutane, trimethylpentane, methyloctane, methylheptane and methylpentane, or a mixture of two or more compounds thereof. Among these, pentane, hexane, heptane, octane, nonane, decane, undecane, dodecane, tridecane, tetradecane, pentadecane, hexadecane, heptadecane, octadecane and nonadecane are more preferable raw materials in that they are liquid or solid and easy to handle. n-Hexane is a preferred raw material from an economical point of view.

Preferable specific linear unsaturated hydrocarbons include ethylene, propene, butene, pentene, hexene, heptene, octene, nonene, decene, methylpropene, cyclohexene, cyclopentene, butadiene, propadiene, acetylene and propyne.

The preferable specific linear unsaturated hydrocarbons are preferably propylene, ethylene and butadiene in that they are cheap and high in conversion to a nano carbon material.

Preferable specific cyclic saturated hydrocarbons include cyclopropane, cyclobutane, cyclopentane, cyclohexane, cycloheptane, cyclooctane, cyclononane, cyclodecane, methylcyclohexane, methylcyclopentane, dimethylcyclopentane and decalin.

Liquefied natural gas composed mainly of methane and containing ethane, propane, butane, nitrogen, carbon dioxide and sulfur compounds, or liquefied petroleum gas that is a mixture of propane, propylene, n-butane, isobutene, butylene, isobutylene and the like is also a preferable material as a raw material for the nano carbon material in that it is cheap.

[Alcohol as raw material]

preferable specific alcohols include methanol, ethanol, propanol, butanol, pentanol, hexanol, heptanol, octanol, nonanol, decanol, undecanol, dodecanol, tridecanol, tetradecanol, pentadecanol, hexadecanol, heptadecanol, octadecanol, isobutyl alcohol, t-butanol, methylbutanol, cyclohexanol and allyl alcohol. Among these, those having an atomic ratio of carbon contained to oxygen contained of at least 2.0 are more preferred from the viewpoint of high yield. An example of an alcohol that is cheap and high in conversion to a nano carbon material includes butanol.

[Aromatic compound as raw material]

Specific examples of preferable aromatic compounds include benzene, toluene, xylene, ethylbenzene, butylbenzene, styrene, biphenyl, phenylacetylene, phenol, ethylphenol, pitch, pitch coke, petroleum coke, coal tar, fluoranthene, pyrene, chrysene, phenanthrene, anthracene, naphthalene, methylnaphthalene, fluorene and acenaphthene. Among these, benzene, toluene, naphthalene, methylnaphthalene, pitch, pitch coke, petroleum coke and coal tar are more preferable raw materials in that they are cheap. Since the pitch, pitch coke, petroleum coke and coal tar are mixtures, they are not preferable for obtaining a high-purity nano carbon material.

[Ether as raw material]

Preferable ethers include aliphatic ethers, aliphatic unsaturated ethers, aromatic ethers and cyclic ethers. Specific examples of the ethers include dimethyl ether, diethyl ether, di-n-propyl ether, diisopropyl ether, di-n-butyl ether, di-t-butyl ether, methyl ethyl ether, ethyl n-butyl ether, methyl vinyl ether, ethyl vinyl ether, divinyl ether, diallyl ether, anisole, phenetole, diphenyl ether, di-$\alpha$-naphthyl ether, ethylene oxide, propylene oxide, tetrahydrofuran, tetrahydropyran and 1,4-dioxane.

Among the above-described raw materials of various kinds, the unsaturated hydrocarbons, particularly, the linear unsaturated hydrocarbons are most preferred in that they are high in conversion to a nano carbon material. It is considered that the unsaturated hydrocarbons are naturally easy to cause a polymerization reaction, and so a carbon-carbon bond of a nano carbon material is easily formed. The above-described raw materials are preferably in a form of a liquid or gas under ordinary temperature and pressure from the viewpoints of easy handling and easy separation of the product from the unreacted raw material.

The above-described raw materials may also be preferably used in combination of at least two of them.

The above-described raw materials preferably become a supercritical fluid or subcritical fluid in a temperature range of from 300 to 800°C under a pressure of 2 to 60 MPa higher than atmospheric pressure.

[Oxygen-element-containing compound]

Specific examples of the oxygen-element-containing compound used in the production process of a nano carbon material according to the present invention include methanol, ethanol, acetone, acetaldehyde, ethylene oxide, ethylene glycol, formaldehyde, water, hydrogen peroxide, oxygen and nitrous oxide. Methanol, acetone, acetaldehyde, ethylene oxide, ethylene glycol and formaldehyde are more preferred.

The oxygen-element-containing compound fills the role of forming oxygen, hydrogen, hydroxides, carbon monoxide, etc. during the high-temperature high-pressure reaction in the production process according to the present invention, thereby severing a weak carbon-carbon bond formed by the reaction and leaving a strong carbon-carbon bond, and consequently selectively growing a nano carbon material such as fullerene, carbon nanotube or diamond. Methanol, ethanol, acetone, acetaldehyde, ethylene oxide, ethylene glycol and formaldehyde may become a raw material forming a part of the nano carbon material.

[Reaction promoting medium]

Specific examples of the reaction promoting medium used in the production process of a nano carbon material according to the present invention include helium, argon, nitrogen, hydrogen, carbon monoxide and carbon dioxide. The reaction promoting medium fills the roles of making the temperature within the reaction system even, lowering the probability of collision between molecules of the raw material to prevent a secondary reaction from occurring, evenly dispersing the raw material to evenly cause the reaction, and so on. Carbon monoxide and carbon dioxide may become a part of the raw material for the nano carbon material and also fills the role of shifting an equilibrium reaction toward a deposition reaction of a nano carbon material. The hydrogen gas is considered to have effects of keeping the surface of a catalyst in an active state, inhibiting a secondary reaction to form amorphous carbon or the like, which is unstable from the viewpoint of structure, and promoting only the growth of a firm and stable bond of nano carbon because of its reducing effect and etching effect. The hydrogen gas is also formed from a decomposition reaction of the raw material.

[Critical temperature and critical pressure]

The critical temperature and critical pressure of hexane as an example of the saturated hydrocarbon, at which hexane becomes a supercritical fluid, are 234.4°C and 2.97 MPa, respectively.

The critical temperature and critical pressure of ethylene as an example of the unsaturated hydrocarbon are 9.65°C and 5.076 MPa, respectively, the critical temperature and critical pressure of propylene are 92°C and 4.62 MPa, respectively, and the critical temperature and critical pressure of acetylene are 35.33°C and 6.139 MPa, respectively.

The critical temperature and critical pressure of 1-butanol as an example of the alcohol are 289.93°C and 4.413 MPa, respectively.

The critical temperature and critical pressure of methanol as an example of the oxygen-element-containing compound are 239.58°C and 8.10 MPa, respectively.

The critical temperature and critical pressure of carbon dioxide as an example of the reaction promoting medium are 31.2°C and 7.38 MPa, respectively.

In the present invention, the supercritical fluid means a fluid having both nature of liquid and nature of gas in a temperature and pressure condition exceeding the critical temperature and pressure (critical point), at which gas and liquid can coexist. The subcritical fluid means a fluid which follows the supercritical fluid, specifically, a fluid that is in a state not exceeding the critical point at a temperature T (absolute temperature) and a pressure P (MPa) satisfying the relationship

$$T \geq 0.8T_0$$

$$P \geq 0.8P_0$$

wherein $T_0$ and $P_0$ are the temperature (critical temperature; absolute temperature) and the pressure (critical pressure; MPa) at the above-described critical point, respectively.

The reaction under coexistence of the raw material and the supercritical fluid or subcritical fluid in the present invention can be conducted by placing a raw material and an oxygen-element-containing compound, and optionally a catalyst or nucleating substance, and further optionally a reaction promoting medium into a closed pressure vessel, heating and pressurizing these contents to a temperature and a pressure, at which a supercritical fluid or subcritical fluid is formed, to form a supercritical fluid or subcritical fluid, and holding the raw material, catalyst and supercritical fluid or subcritical fluid in a coexisted state within the closed pressure vessel. At this time, the raw material itself and/or the oxygen-element-containing compound may naturally forms a supercritical fluid or subcritical fluid. In such a case, it is not always necessary to put another coexistent substance forming a supercritical fluid or subcritical fluid than the raw material and oxygen-element-containing compound in the reaction system. The heating temperature and pressurizing pressure vary according to the substance forming the supercritical fluid or subcritical fluid. However, the heating and pressurization is preferably conducted in a temperature range of from 300 to 800°C and a pressure range of from 2 to 60 MPa from the viewpoints of easy reaction, reduction of cost of the apparatus used and energy saving in operation. The heating and pressurization is more preferably conducted in a temperature range of from 300 to 800°C and a pressure range of from 2 to 40 MPa from the viewpoints of the yield of the nano carbon material produced, apparatus cost and operating cost of the apparatus. The raw material of the nano carbon material preferably becomes a state of a supercritical fluid under reaction conditions in that the reaction rate of the synthetic reaction is enhanced. The substance forming the supercritical fluid or subcritical fluid in the present invention is preferably a substance which becomes a supercritical fluid in a temperature range of from 300 to 800°C and a pressure range of from 2 to 60 MPa.

[Synthesis of fullerene]

Fullerene composed of only carbon elements is a three-dimensional closed spherical molecule composed of five-membered rings and six-membered rings of carbon atoms. Supposing that the number of vertexes of a polyhedron composed of carbon atoms is V, the number of sides is E, and the number of faces is F, the relationship of the Euler's theorem, E + 2 = V + F and 2E = 3V holds. Examples of the fullerene include $C_{60}$ composed of 60 carbon atoms, $C_{70}$ composed of 70 carbon atoms, $C_{76}$ composed of 76 carbon atoms, $C_{78}$ composed of 78 carbon atoms, $C_{82}$ composed of 82 carbon atoms, $C_{84}$ composed of 84 carbon atoms, $C_{86}$ composed of 86 carbon atoms, $C_{88}$ composed of 88 carbon atoms, $C_{90}$ composed of 90 carbon atoms, $C_{94}$ composed of 94 carbon atoms and $C_{96}$ composed of 96 carbon atoms.

The synthesis of fullerene in the present invention can be conducted by using, as a raw material, at least one compound composed of a carbon element and a hydrogen element selected from the group consisting of linear saturated hydrocarbons, linear unsaturated hydrocarbons, cyclic saturated hydrocarbons, aromatic hydrocarbons, alcohols and ethers, mixing the compound with at least one oxygen-element-containing substance selected from the group consisting of methanol, acetone, acetaldehyde, ethylene oxide, ethylene glycol, formaldehyde, water, hydrogen peroxide, oxygen and nitrous oxide and causing the mixture to coexist with a supercritical fluid or subcritical fluid within a temperature range of from 300 to 600°C under a pressure of from 2 to 60 MPa. Preferable temperature and pressure in the reaction are 300 to 500°C and 2 to 40 MPa, respectively. The ratio of the oxygen element to the carbon element in the mixture of the raw material and the oxygen-element-containing compound is set to a range of from 0.1 to 1.0, or a molar ratio of the oxygen-element-containing compound to the raw material is set to a range of from 0.1 to 6.0, whereby a dehydrogenation reaction of the raw material can be accelerated to form fullerene, and amorphous carbon formed by a secondary reaction can be removed by etching to form fullerene with good purity.

[Separation and analysis of fullerene]

Extraction of fullerene can be conducted by dispersing the reaction product by the present invention in a solvent to extract a soluble component and then separating solids by filtration and centrifugation. Removal of the solvent after the separation can be conducted by evaporating and removing the remaining solvent by heating or reduction of pressure. It is also useful to use high-pressure liquid chromatography in the separation and purification. As the solvent for the fullerene, may be used at least one nonpolar solvent selected from the group consisting of toluene, xylene, benzene, chlorobenzene, dichlorobenzene, 1,2,4-trichlorobenzene, 1-methylnaphthalene, 1-chloronaphthalene, tetralin, anisole, 1,1,2,2-tetrachloroethane, decalin, 2-methylthiophene, carbon disulfide and cyclohexane.

Fullerene can be identified by analysis such as laser-vaporization cluster beam mass spectrum analysis, infrared absorption spectrum analysis, visible ultraviolet absorption spectrum analysis, high-pressure chromatographic analysis, Raman scattering spectrum analysis, $^{13}$C-NMR spectrum analysis, electron beam diffraction analysis, X-ray diffraction analysis or neutron diffraction analysis.

[Synthesis of carbon nanotube]

The synthesis of the carbon nanotube in the present invention can be conducted by mixing at least one compound composed of a carbon element and a hydrogen element selected from the group consisting of linear saturated hydrocarbons, linear unsaturated hydrocarbons, cyclic saturated hydrocarbons, aromatic hydrocarbons, alcohols and ethers with at least one oxygen-element-containing substance selected from the group consisting of methanol, ethanol, acetone, acetaldehyde, ethylene oxide, ethylene glycol, formaldehyde, water, hydrogen peroxide, oxygen and nitrous oxide and causing the mixture to coexist with a supercritical fluid or subcritical fluid in the presence of a transition metal or transition metal compound within a temperature range of from 300 to 800°C under a pressure of from 2 to 60 MPa. Preferable temperature and pressure in the reaction are 400 to 800°C and 2 to 40 MPa, respectively. A graphene sheet (a single layer of graphite) is formed on the surface of the transition metal under the above-described conditions, and a tube structure formed by winding the graphene sheet is grown. At the same time, the formation of a multi-layer graphene sheet takes place in a direction perpendicular to the transition axis of the tube, and so it is considered that a multi-layer tube structure is also grown. Since the carbon-carbon bond between graphene sheets in the multi-layer structure is weaker than the bond within the graphene sheet, the ratio of the oxygen element to the carbon element in the mixture of the raw material and the oxygen-element-containing compound is set to a range of from 0.1 to 1.0, or the molar ratio of the oxygen-element-containing compound to the raw material is set to a range of from 0.1 to 6.0, whereby the growth of the multi-layer structure can be inhibited, and the growth of the tube in the transition axis (longitudinal direction) can be caused to progress. Thereby, conditions for inhibiting the growth of the multi-layer structure are set, whereby a single-layer carbon nanotube can be formed. The optimum conditions for forming the single-layer carbon nanotube vary according to the kind of the raw material, the kind of the oxygen-element-containing compound, the kind of the reaction promoting medium, partial pressures of the respective components, the overall reaction pressure, the reaction temperature, the kind of the catalyst, and/or the like.

It may be preferred in some cases that the carbon nanotube material should have a residue derived from the catalyst in the interior of a unit forming the nano carbon material or on the tip part thereof according to its uses. In such a case, there is no need of conducting purification with an acid (for example, nitric acid, hydrochloric acid, sulfuric acid, hydrofluoric acid or the like) or an alkali (for example, sodium hydroxide, potassium hydroxide or the like). However, when the carbon nanotube is used in an application field, which may be possibly adversely affected by the remaining of the transition metal or transition metal compound derived from the catalyst, the above-described purification step is preferably conducted.

[Catalyst for synthesis of carbon nanotube]

In the synthetic reaction of the carbon nanotube, a nano carbon material is formed and grown from the raw material with the transition metal or transition metal compound as the starting point. This is considered to be attributable to the fact that the transition metal or transition metal compound functions as a catalyst.

When a transition metal catalyst is used in the synthesis of the carbon nanotube, a transition metal oxide is easy to be formed on the surface of the transition metal by handling in the air or by oxygen or the like contained in the reaction vessel. It is thus necessary to reduce the oxide with hydrogen or carbon monoxide produced during the reaction to expose a fresh transition metal surface. Since the starting temperature of the reduction of nickel oxide, cobalt oxide or iron oxide is from about 200°C, it is preferable to conduct the synthetic reaction of the nano carbon material at a temperature not lower than 300°C.

Since the size of the nano carbon material synthesized greatly depends on the size of the catalyst particles, it is necessary to finely grind the catalyst particles and bring the catalyst particles into uniform contact with the raw material. The transition metal may be carried on an oxide such as silica, zeolite, alumina, titania (titanium oxide) or magnesia (magnesium oxide), or active carbon and finely ground to use it as the catalyst.

The catalyst is placed together with the raw material, the oxygen-element-containing compound and the substance which forms the supercritical fluid or subcritical fluid into a closed pressure vessel, and held in a state that the catalyst is brought into contact with the raw material, oxygen-element-containing compound and supercritical fluid or subcritical fluid. The transition metal or transition metal compound of the catalyst may be not only that externally added, but also that contained in the raw material from the first or that formed by contact of the raw material with the supercritical fluid or subcritical fluid. A material forming the reaction vessel may also be used as the catalyst. Plural kinds of catalysts may be used as the catalyst. Two or more kinds of transition metals may be carried on the carrier.

Examples of transition metal elements constituting the transition metal or transition metal compound include Ti, V, Cr, Mn, Fe, Co, Ni, Cu, Y, Zn, Nb, Mo, Ru, Rh, Pd, Ag, Ta, W, Pt and Au. Among these, Ni, Co, Fe, Cu, Cr, W, Mo, Ti, V, Mn, Ru, Rh and Ag are preferred elements, with Ni, Co, Fe, Cr, W, Mo and Ti being most preferred elements.

The transition metal compound is preferably a transition metal oxide, transition metal hydroxide, organic transition metal compound, transition metal sulfide, transition metal carbide, transition metal nitride or transition metal salt. Among these, the organic transition metal compound is preferred as the catalyst in that it is easy to decompose to easily form fine transition metal powder having a large specific surface area except that it is expensive. The transition metal oxide, transition metal hydroxide or transition metal salt is reduced with hydrogen generated by the decomposition reaction of the raw material under high-temperature and high-pressure conditions and converted to fine transition metal powder, thereby functioning as a catalyst. The transition metal salt is preferred because it is reduced or oxidized into a transition metal or transition metal oxide by the reaction of the production process according to the present invention, and the transition metal or transition metal oxide can be dissolved with an acid to recover it as a transition metal salt, so that it can be recycled as the catalyst. However, the transition metal salt is easy to form a nitrate, sulfate or oxygen as the transition metal salt, and so it is not preferable to use it singly.

Preferable examples of the organic transition metal compound include ferrocene, nickelocene, nickel formate, nickel oxalate, nickel naphthenate, nickel phthalocyanine, cobalt phthalocyanine, copper phthalocyanine, nickel acetylacetonate, cobalt acetylacetonate, iron acetylacetonate, copper acetylacetonate, nickel carbonyl, cobalt carbonyl, iron carbonyl, bis(triphenylphosphine) dicarbonylnickel, dibromobis(triphenylphosphine) nickel and chlorotris(triphosphine) rhodium. Incidentally, the carbon element contained in the organic transition metal compound may be used in the synthetic reaction and converted into a part of the nano carbon material produced in some cases.

[Analysis of carbon nanotube]

The form and microstructure of the carbon nanotube can be identified by observation through a scanning microscope and a transmission electron microscope (TEM), respectively. Whether the carbon nanotube produced is a single-layer carbon nanotube or a multi-layer carbon nanotube can also be identified by observation through a high resolution transmission electron microscope.

The proportion of an amorphous component contained in the nano carbon material can be analyzed by an analytical method of X-ray diffraction or laser Raman diffraction. In a Raman scanning spectrum of the carbon nanotube, a Raman line is observed at both about 1528 to 1606 $cm^{-1}$ and about 1353 $cm^{-1}$. A peak of the X-ray diffraction becomes sharp when the purity is high, but becomes broad when an amorphous component is contained in plenty. When the amorphous component is contained in plenty, a peak at about 1353 $cm^{-1}$ in the Raman spectrum is observed greatly. Accordingly, the purity of the nano carbon material is mainly evaluated by the form identification through a scanning microscope, and besides by observation through TEM, a half band width of the X-ray diffraction peak, a ratio of the peak intensity at about 1353 $cm^{-1}$ to the peak intensity at about 1528 to 1606 $cm^{-1}$ in a Raman spectrum.

[Synthesis of diamond]

The synthesis of the diamond in the present invention can be conducted by mixing at least one compound composed of a carbon element and a hydrogen element selected from Group A consisting of linear saturated hydrocarbons, linear unsaturated hydrocarbons, cyclic saturated hydrocarbons, aromatic hydrocarbons, alcohols and ethers with at least one oxygen-element-containing substance selected from Group B consisting of methanol, ethanol, acetone, acetaldehyde, ethylene oxide, ethylene glycol, formaldehyde, water, hydrogen peroxide, oxygen and nitrous oxide and causing the mixture to coexist with a supercritical fluid or subcritical fluid in the presence of a substance selected from the group consisting of silicon, silicon carbide, cubic system boron nitride, germanium, zinc blende structure compounds, chalopyrite structure compounds, wurtrite structure compounds, molybdenum, tungsten and copper within a temperature range of from 400 to 800°C under a pressure of from 2 to 60 MPa. Preferable temperature and pressure in the reaction are 600 to 800°C and 2 to 40 MPa, respectively. The ratio of the oxygen element to the carbon element in the mixture of the raw material and the oxygen-element-containing compound is set to a range of from 0.1 to 1.0 under the above-described temperature and pressure conditions, or the molar ratio of the oxygen-element-containing compound to the raw material is set to a range of from 0.1 to 6.0, whereby a dehydrogenation reaction of the raw material can be accelerated to form diamond, and amorphous carbon formed by a secondary reaction can be removed by etching to form diamond with good purity.

[Nucleating substance]

As a substance used as a nucleus in growth of diamond, is preferred a substance having a diamond structure or an analogous structure to diamond or a substance having a grating constant close to that of diamond. As the substance having the diamond structure, is preferred silicon, silicon carbide, cubic system boron nitride or germanium. As the substance having the analogous structure to diamond, is preferred a zinc blende structure compound, chalopyrite structure compound or wurtrite structure compound. Examples of the zinc blende structure compound include zinc sulfide (ZnS) and gallium arsenic (GaAs). An example of the chalopyrite structure compound includes $CuGaS_2$. Examples of the substance having the grating constant close to that of diamond include molybdenum and tungsten of a body-centered cubic lattice structure, and copper of a face-centered cubic lattice structure. Silicon and cubic system boron nitride are most preferred materials as the nucleating substances. As the form of the nucleating substance, may be used a plate or powder.

[Analysis of diamond]

The crystal form of the diamond can be identified through a scanning electron microscope. The evaluation of crystallinity can be made by electron beam diffraction, X-ray diffraction, Raman scattering spectrum analysis or X-ray photoelectron spectroscopy (XPS). In a Raman spectrum of the diamond, a peak is observed at 1332 $cm^{-1}$.

The present invention will hereinafter be described by the following examples. However, the present invention is not limited to these examples.

EXAMPLE 1:

A nano carbon material was synthesized by means of such a reaction apparatus as illustrated in Fig. 2.

A high-temperature high-pressure reaction vessel having an inner volume of 95 ml and made of Hastelloy (Ni-Mo alloy) was first charged with 0.2 g of silica powder, on which 70 % by weight of nickel metal had been carried, as a catalyst, the interior of the reaction vessel was evacuated to vacuum by an vacuum pump, and 4.2 g of propylene as a raw material and 3.2 g of methanol as an oxygen-element-containing compound were then introduced into the reaction vessel.

The reaction vessel was then heated to 800°C, and the pressure within the reaction vessel was increased to 25 MPa to conduct a reaction for 3 hours. The reaction vessel was cooled to room temperature and opened, and solids were taken out and dried to obtain a reaction product.

The amount of nickel carried on the silica powder in the nickel catalyst carried on the silica powder was 70 % by weight, the primary particle diameter and secondary particle diameter of the silica powder were 0.01 to 0.02 $\mu$m and about 20 $\mu$m, respectively. Its surface area was 30 to 40 $m^2/g$.

EXAMPLE 2:

A nano carbon material was synthesized in the same manner as in EXAMPLE 1 except that 4.2 g of propylene and 3.2 g of methanol were changed to 4.2 g of 1-pentene and 5.2 g of acetone, respectively.

EXAMPLE 3:

A nano carbon material was synthesized in the same manner as in EXAMPLE 1 except that 4.2 g of propylene and 3.2 g of methanol were changed to 4.2 g of hexane and 4.7 g of ethylene oxide, respectively.

The reaction products of EXAMPLES 1 to 3 obtained in the respective operations were observed through a scanning electron microscope and a transmission electron microscope and subjected to Raman spectrophotometry.

In the observation of the products of EXAMPLES 1 to 3 through the transmission electron microscope, a single-layer carbon nanotube was identified in any case. Their diameters were from 0.7 nm to 10 nm. In any case, the conversion of the raw material exceeded 40 % and was hence high, and it was found that a high yield was achieved.

In the Raman spectrophotometry of the products, a peak called G band at about 1590 cm$^{-1}$ was observed, but a peak called D band at about 1350 cm$^{-1}$ was scarcely observed.

EXAMPLE 4:

A nano carbon material was synthesized in the same manner as in EXAMPLE 1 except that 4.2 g of propylene and 3.2 g of methanol were changed to 2.0 g of ethanol and 1.4 g of methanol, respectively, 10 g of dry ice was added, and the reaction temperature and pressure were changed to 600°C and 19 MPa, respectively.

From the result of the observation of the resultant product through the transmission electron microscope, it was identified that the product is a single-layer carbon nanotube. However, the weight of the product obtained was low compared with EXAMPLEs 1, 2 and 3, and so the yield was low.

REFERENTIAL EXAMPLE 1:

A nano carbon material was synthesized in the same manner as in EXAMPLE 4 except that no methanol was added.

From the observation through the transmission electron microscope, it was identified that the resultant product is a single-layer carbon nanotube.

COMPARATIVE EXAMPLE 1:

After a quartz boat, having 0.2 g of silica powder

on which 70 % by weight of nickel metal had been carried was placed in a quart glass reaction vessel, the interior of the system was evacuated to vacuum, purged with argon gas and heated to 600°C. Argon gas was bubbled in 2.0 g of ethanol, and the ethanol was introduced at a flow rate of 200 sccm into the reaction vessel to attempt a synthetic reaction of a nano carbon material.

From the result of the observation through the transmission electron microscope, it was identified that the product obtained is a single-layer carbon nanotube.

When the nano carbon materials obtained in EXAMPLE 4, REFERENTIAL EXAMPLE 1 AND COMPARATIVE EXAMPLE 1 were compared with one another by means of Raman spectrophotometry, the ratio of the intensity of a peak called D band at about 1350 cm$^{-1}$ to the intensity of a peak called G band at about 1590 cm$^{-1}$ was greater in order of COMPARATIVE EXAMPLE 1 > REFERENTIAL EXAMPLE 1 > EXAMPLE 4. From this result, it was found that the carbon nanotube obtained in EXAMPLE 4 is higher in purity.

With respect to the yield, the weight of the nano carbon material obtained in EXAMPLE 4 was higher than COMPARATIVE EXAMPLE 1, and so it was found that the yield in EXAMPLE 4 was higher.

EXAMPLE 5:

A nano carbon material was synthesized by means of such a reaction apparatus as illustrated in Fig. 2.

In a pressure vessel having an inner volume of 95 ml and made of Hastelloy (Ni-Mo alloy), 4.6 g of toluene and 1.6 g of methanol were first mixed, and 30 g of dry ice was added to seal the vessel. Carbon dioxide vaporized at room temperature was slightly evacuated to adjust the pressure, and a reaction was conducted for 3 hours at a temperature of 500°C under a pressure of 20 MPa. The pressure vessel was then cooled to room temperature and opened, and a product was taken out and evaporated to solids to obtain a reaction product.

The resultant reaction product was then dissolved in toluene and subjected to high-pressure liquid chromatography. As a result, a peak was observed at a retention time at a peak position corresponding to fullerene.

As the results of infrared absorption spectrum analysis and visible ultraviolet absorption spectrum analysis of the resultant reaction product, absorption peaks based on the existing fullerene were observed.

EXAMPLE 6:

A nano carbon material was synthesized by means of such a reaction apparatus as illustrated in Fig. 2.

A high-temperature high-pressure reaction vessel having an inner volume of 95 ml and made of Hastelloy (Ni-Mo alloy) was first charged with a silicon wafer, the surface of which had been scratched by a diamond pen, as a nucleating substance, the interior of the reaction vessel was evacuated to vacuum by an vacuum pump, and 2.0 g of tert-butyl alcohol as a raw material and 2.3 g of methanol as an oxygen-element-containing compound were then introduced into the reaction vessel. The reaction vessel was then heated to 800°C, and the pressure within the reaction vessel was increased to 25 MPa to conduct a reaction for 3 hours. The reaction vessel was cooled to room temperature and opened, and solids were taken out and dried to obtain a reaction product.

EXAMPLE 7:

A nano carbon material was synthesized in the same manner as in EXAMPLE 6 except that 2.0 g of tert-butyl alcohol and 2.3 g of methanol were changed to 4.0 g of diisopropyl ether and 1.1 g of 35 % by weight aqueous hydrogen peroxide, respectively.

EXAMPLE 8:

A nano carbon material was synthesized in the same manner as in EXAMPLE 6 except that 2.0 g of tert-butyl alcohol and 2.3 g of methanol were changed to 2.0 g of methane and 4.0 g of methanol, respectively.

The reaction products of EXAMPLES 6 to 8 obtained in the respective operations were subjected to observation through a scanning electron microscope Raman spectrophotometry, observation of electron beam diffraction image and X-ray diffraction analysis.

In the Raman spectrophotometry, a peak was observed at 1332 cm$^{-1}$ in any product. With respect to an electron beam diffraction pattern, the same pattern as in diamond was shown. In the X-ray diffraction, each product had a main peak at about $2\theta = 45.1°$ conforming to the diffraction pattern of diamond. In the observation through the scanning electron microscope, a particulate substance was observed around on the scratched portions of the silicon wafer.

As has been described above, according to the present invention, there can be provided production processes, by which nano carbon materials such as carbon nanotubes, fullerene and diamond can be produced from a cheap raw material, and mass synthesis can be easily scaled up.

Disclosed herein is a process for producing a nano carbon material, which comprises the steps of mixing at least one raw material selected from the group consisting of linear saturated hydrocarbons, linear unsaturated hydrocarbons, cyclic saturated hydrocarbons, aromatic hydrocarbons, alcohols and ethers with at least one oxygen-element-containing substance selected from the group consisting of methanol, ethanol, acetone, acetaldehyde, ethylene oxide, ethylene glycol, formaldehyde, water, hydrogen peroxide, oxygen and nitrous oxide; and causing the mixture to coexist with a supercritical fluid or subcritical fluid within a temperature range of from 300 to 800°C under a pressure of from 2 to 60 MPa. According to this process, nano carbon materials typified by carbon nanotubes, diamond and fullerene are cheaply produced.

**Claims**

1.    A process for producing a nano carbon material, which comprises the steps of mixing at least one compound composed of a carbon element and a hydrogen element selected from Group A consisting of linear saturated hydrocarbons, linear unsaturated hydrocarbons, cyclic saturated hydrocarbons, aromatic hydrocarbons, alcohols and ethers with at least one oxygen-element-containing substance selected from Group B consisting of methanol, ethanol, acetone, acetaldehyde, ethylene oxide, ethylene glycol, formaldehyde, water, hydrogen peroxide, oxygen and nitrous oxide; and causing the mixture to coexist with a supercritical fluid or subcritical fluid within a temperature range of from 300 to 800°C under a pressure of from 2 to 60 MPa.

2.    The production process according to claim 1, wherein the nano carbon material is selected from the group consisting of fullerene, a carbon nanotube and diamond.

3.    A process for producing a nano carbon material according to claim 1, wherein the mixture is caused to coexist with a supercritical fluid or subcritical fluid in the presence of a transition metal or transition metal compound within a temperature range of from 300 to 800°C under a pressure of from 2 to 60 MPa, thereby producing a carbon nanotube.

4.    A process for producing a nano carbon material according to claim 1, wherein the mixture is caused to coexist with a supercritical fluid or subcritical fluid in the presence of a substance selected from the group consisting of silicon, silicon carbide, cubic system boron nitride, germanium, zinc blende structure compounds, chalopyrite structure compounds, wurtrite structure compounds, molybdenum, tungsten and copper within a temperature range of from 400 to 800°C under a pressure of from 2 to 60 MPa, thereby producing diamond.

5.    A process for producing a nano carbon material according to claim 1, wherein the mixture is caused to coexist with a supercritical fluid or subcritical fluid within a temperature range of from 300 to 600°C under a pressure of from 2 to 60 MPa, thereby producing fullerene.

6.    The production processes according to claim 1 or any one of claims 3 to 5, wherein a substance that forms the supercritical fluid or subcritical fluid is composed of at least one selected from the group consisting of linear saturated hydrocarbons, linear unsaturated hydrocarbons, cyclic saturated hydrocarbons, aromatic hydrocarbons, alcohols, ethers, acetone, acetaldehyde, ethylene oxide, ethylene glycol, formaldehyde, water, hydrogen peroxide, oxygen, nitrous oxide, helium, argon, nitrogen, hydrogen, carbon monoxide and carbon dioxide, and becomes a supercritical fluid or subcritical fluid within the temperature and pressure ranges.

7. The production processes according to claim 1 or any one of claims 3 to 5, wherein the contact of the raw material with the supercritical fluid or subcritical fluid is conducted under a pressure of from 4 to 40 MPa.

8. The production processes according to claim 3, wherein the transition metal compound is at least one compound selected from the group consisting of transition metal sulfides, transition metal carbides, organic transition metal compounds, transition metal nitrides, transition metal salts and transition metal oxides.

9. The production processes according to claim 8, wherein the transition metal element of the transition metal or transition metal compound is at least one element selected from the group consisting of nickel, cobalt, iron, copper, silver, chromium, tungsten, molybdenum, titanium, ruthenium, rhodium and palladium.

10. The production processes according to claim 1 or any one of claims 3 to 5, wherein the molar ratio of the substance selected from Group B to the compound selected from Group A falls within a range of from 0.1 to 6.0.

11. The production processes according to claim 1 or any one of claims 3 to 5, which further comprises the step of controlling the concentration of a gas monitored during the synthetic reaction of the nano carbon material so as to fall within a fixed range.

12. The production processes according to claim 1 or any one of claims 3 to 5, wherein the ratio of the oxygen element to the carbon element in the mixture of the compound selected from the Group A and the substance selected from the Group B falls within a range of from 0.1 to 1.0.

13. The production processes according to claim 1 or any one of claims 3 to 5, which further comprises the step of controlling the ratio of the oxygen element to the carbon element in the overall gas during the synthetic reaction of the nano carbon material so as to fall within a range of from 0.1 to 1.0.

14. The production processes according to claim 3, wherein the carbon nanotube is a single-layer carbon nanotube.

**Patentansprüche**

1. Verfahren zur Herstellung eines Nanokohlenstoffmaterials, welches die Schritte umfasst des Mischens wenigstens einer aus einem Kohlenstoffelement und einem Wasserstoffelement bestehenden Verbindung ausgewählt aus Gruppe A, bestehend aus linearen gesättigten Kohlenwasserstoffen, linearen ungesättigten Kohlenwasserstoffen, cyclischen gesättigten Kohlenwasserstoffen, aromatischen Kohlenwasserstoffen, Alkoholen und Ethern, mit wenigstens einer Sauerstoff-Element-enthaltenden Substanz ausgewählt aus Gruppe B, bestehend aus Methanol, Ethanol, Aceton, Acetaldehyd, Ethylenoxid, Ethylenglycol, Formaldehyd, Wasser, Wasserstoffperoxid, Sauerstoff und Stickstoffoxid; und des Veranlassens der Mischung mit einem überkritischen Fluid oder unterkritischen Fluid innerhalb eines Temperaturbereichs von 300 bis 800°C unter einem Druck von 2 bis 60 MPa zu koexistieren.

2. Verfahren zur Herstellung nach Anspruch 1, wobei das Nanokohlenstoffmaterial aus der aus Fulleren, einer Kohlenstoffnanoröhre und Diamant bestehenden Gruppe ausgewählt ist.

3. Verfahren zur Herstellung eines Nanokohlenstoffmaterials nach Anspruch 1, wobei die Mischung veranlasst wird mit einem überkritischen Fluid oder unterkritschen Fluid in der Gegenwart eines Übergangsmetalls oder einer Übergangsmetallverbindung innerhalb eines Temperaturbereichs von 300 bis 800°C unter einem Druck von 2 bis 60 MPa zu koexistieren, dadurch eine Kohlenstoffnanoröhre herstellend.

4. Verfahren zur Herstellung eines Nanokohlenstoffmaterials nach Anspruch 1, wobei die Mischung veranlasst wird mit einem überkritischen Fluid oder unterkritschen Fluid in der Gegenwart einer Substanz ausgewählt aus der Gruppe bestehend aus Silizium, Siliziumcarbid, Bornitrid mit kubischem System, Germanium, Verbindungen mit Zinkblendestruktur, Verbindungen mit Chalopyritstruktur, Verbindungen mit Wurtritstruktur, Molybdän, Wolfram und Kupfer innerhalb eines Temperaturbereichs von 400 bis 800°C unter einem Druck von 2 bis 60 MPa zu koexistieren, dadurch Diamant herstellend.

5. Verfahren zur Herstellung eines Nanokohlenstoffmaterials nach Anspruch 1, wobei die Mischung veranlasst wird mit einem überkritischen Fluid oder unterkritschen Fluid innerhalb eines Temperaturbereichs von 300 bis 600°C unter einem Druck von 2 bis 60 MPa zu koexistieren, dadurch Fulleren herstellend.

6. Verfahren zur Herstellung nach Anspruch 1 oder einem der Ansprüche 3 bis 5, wobei sich eine Substanz, die das überkritische Fluid oder unterkritische Fluid bildet, wenigstens aus einem zusammengesetzt, ausgewählt aus der Gruppe bestehend aus linearen gesättigten Kohlenwasserstoffen, linearen ungesättigten Kohlenwasserstoffen, cyclischen gesättigten Kohlenwasserstoffen, aromatischen Kohlenwasserstoffen, Alkoholen, Ethern, Aceton, Acetaldehyd, Ethylenoxid, Ethylenglycol, Formaldehyd, Wasser, Wasserstoffperoxid, Sauerstoff, Stickstoffoxid, Helium, Argon, Stickstoff, Wasserstoff, Kohlenstoffmonoxid und Kohlenstoffdioxid, und ein überkritisches Fluid oder unterkritisches Fluid innerhalb der Temperatur- und Druckbereiche wird.

7. Verfahren zur Herstellung nach Anspruch 1 oder einem der Ansprüche 3 bis 5, wobei der Kontakt des Rohmaterials mit dem überkritischen Fluid oder unterkritischen Fluid unter einem Druck von 4 bis 40 MPa durchgeführt wird.

8. Verfahren zur Herstellung nach Anspruch 3, wobei die Übergangmetallverbindung wenigstens eine Verbindung darstellt, ausgewählt aus der aus Übergangsmetallsulfiden, Übergangsmetallcarbiden, organischen Übergangsmetallverbindungen, Übergangsmetallnitriden, Übergangsmetallsalzen und Übergangsmetalloxiden bestehenden Gruppe.

9. Verfahren zur Herstellung nach Anspruch 8, wobei das Übergangsmetallelement des Übergangsmetalls oder der Übergangsmetallverbindung wenigstens ein Element ausgewählt aus der aus Nickel, Cobalt, Eisen, Kupfer, Silber, Chrom, Wolfram, Molybdän, Titan, Ruthenium, Rhodium und Palladium bestehenden Gruppe darstellt.

10. Verfahren zur Herstellung nach Anspruch 1 oder einem der Ansprüche 3 bis 5, wobei das Molverhältnis der aus Gruppe B ausgewählten Substanz zu der aus Gruppe A ausgewählten Verbindung in einen Bereich von 0,1 bis 6,0 fällt.

11. Verfahren zur Herstellung nach Anspruch 1 oder einem der Ansprüche 3 bis 5, welches ferner den Schritt des Regelns der Konzentration eines während der Synthesereaktion des Nanokohlenstoffmaterials überwachten Gases umfasst, so dass sie in einen festgelegten Bereich fällt.

12. Verfahren zur Herstellung nach Anspruch 1 oder einem der Ansprüche 3 bis 5, wobei das Verhältnis des Sauerstoffelements zu dem Kohlenstoffelement in der Mischung der aus der Gruppe A ausgewählten Verbindung und der aus der Gruppe B ausgewählten Substanz in einen Bereich von 0,1 bis 1,0 fällt.

13. Verfahren zur Herstellung nach Anspruch 1 oder einem der Ansprüche 3 bis 5, welches ferner den Schritt des Regelns des Verhältnisses des Sauerstoffelements zu dem Kohlenstoffelement in dem gesamten Gas während der Synthesereaktion des Nanokohlenstoffmaterials umfasst, so dass es in einen Bereich von 0,1 bis 1,0 fällt.

14. Verfahren zur Herstellung nach Anspruch 3, wobei die Kohlenstoffnanoröhre eine Einzelschicht-Kohlenstoffnanoröhre darstellt.

## Revendications

1. Un procédé de production d'un nanomatériau de carbone, qui comprend les étapes consistant à mélanger au moins un composé constitué de carbone élémentaire et d'hydrogène élémentaire choisi dans le Groupe A formé par les hydrocarbures saturés linéaires, les hydrocarbures insaturés linéaires, les hydrocarbures saturés cycliques, les hydrocarbures aromatiques, les alcools et les éthers avec au moins une substance contenant de l'oxygène élémentaire choisie dans le Groupe B formé par le méthanol, l'éthanol, l'acétone, l'acétaldéhyde, l'oxyde d'éthylène, l'éthylèneglycol, le formaldéhyde, l'eau, le peroxyde d'hydrogène, l'oxygène et l'oxyde nitreux ; et amener le mélange à coexister avec un fluide surcritique ou un fluide sous-critique dans un intervalle de température de 300 à 800°C sous une pression de 2 à 60 MPa.

2. Le procédé de production selon la revendication 1, dans lequel le nanomatériau de carbone est choisi dans le groupe formé par un fullerène, un nanotube de carbone et le diamant.

3. Un procédé de production d'un nanomatériau de carbone selon la revendication 1, dans lequel le mélange est amené à coexister avec un fluide surcritique ou un fluide sous-critique en présence d'un métal de transition ou d'un composé de métal de transition dans un intervalle de température de 300 à 800°C sous une pression de 2 à 60 MPa, pour produire ainsi un nanotube de carbone.

4. Un procédé de production d'un nanomatériau de carbone selon la revendication 1, dans lequel le mélange est amené à coexister avec un fluide surcritique ou un fluide sous-critique en présence d'une substance choisie dans le groupe formé par le silicium, le carbure de silicium, le nitrure bore du système cubique, le germanium, les composés à structure de sphalérite, les composés à structure de chalcopyrite, les composés à structure de wurtzite, le molybdène, le tungstène et le cuivre dans un intervalle de température de 400 à 800°C sous une pression de 2 à 60 MPa, pour produire ainsi du diamant.

5. Un procédé de production d'un nanomatériau de carbone selon la revendication 1, dans lequel le mélange est amené à coexister avec un fluide surcritique ou un fluide sous-critique dans un intervalle de température de 300 à 600°C sous une pression de 2 à 60 MPa, pour produire ainsi un fullerène.

6. Les procédés de production selon la revendication 1 ou l'une quelconque des revendications 3 à 5, dans lesquels une substance qui forme le fluide surcritique ou le fluide sous-critique est constituée d'au moins un membre du groupe formé par les hydrocarbures saturés linéaires, les hydrocarbures insaturés linéaires, les hydrocarbures saturés cycliques, les hydrocarbures aromatiques, les alcools, les éthers, l'acétone, l'acétaldéhyde, l'oxyde d'éthylène, l'éthylèneglycol, le formaldéhyde, l'eau, le peroxyde d'hydrogène, l'oxygène, l'oxyde nitreux, l'hélium, l'argon, l'azote, l'hydrogène, le monoxyde de carbone et le dioxyde de carbone, et devient un fluide surcritique ou un fluide sous-critique dans les intervalles de température et de pression.

7. Les procédés de production selon la revendication 1 ou l'une quelconque des revendications 3 à 5, dans lesquels le contact de la matière première avec le fluide surcritique ou le fluide sous-critique est effectué sous une pression de 4 à 40 MPa.

8. Les procédés de production selon la revendication 3, dans lesquels le composé de métal de transition est au moins un composé choisi dans le groupe formé par les sulfures de métaux de transition, les carbures de métaux de transition, les composés organiques de métaux de transition, les nitrures de métaux de transition, les sels de métaux de transition et les oxydes de métaux de transition.

9. Les procédés de production selon la revendication 8, dans lesquels l'élément des métaux de transition du métal de transition ou du composé de métal de transition est au moins un élément choisi dans le groupe formé par le nickel, le cobalt, le fer, le cuivre, l'argent, le chrome, le tungstène, le molybdène, le titane, le ruthénium, le rhodium et le palladium.

10. Les procédés de production selon la revendication 1 ou l'une quelconque des revendications 3 à 5, dans lesquels le rapport molaire de la substance choisie dans le Groupe B au composé choisi dans le Groupe A s'inscrit dans un intervalle de 0,1 à 6,0.

11. Les procédés de production selon la revendication 1 ou l'une quelconque des revendications 3 à 5, comprenant de plus l'étape consistant à régler la concentration d'un gaz contrôlée pendant la réaction de synthèse du nanomatériau de carbone en sorte qu'elle s'inscrive dans un intervalle déterminé.

12. Les procédés de production selon la revendication 1 ou l'une quelconque des revendications 3 à 5, dans lesquels le rapport de l'oxygène élémentaire au carbone élémentaire dans le mélange du composé choisi dans le Groupe A et de la substance choisie dans le Groupe B s'inscrit dans un intervalle de 0,1 à 1,0.

13. Les procédés de production selon la revendication 1 ou l'une quelconque des revendications 3 à 5, comprenant de plus l'étape consistant à régler le rapport de l'oxygène élémentaire au carbone élémentaire dans le gaz global pendant la réaction de synthèse du nanomatériau de carbone en sorte qu'il s'inscrive dans un intervalle de 0,1 à 1,0.

14. Les procédés de production selon la revendication 3, dans lesquels le nanotube de carbone est un nanotube de carbone monocouche.

# FIG. 1

```
┌─────────────────────────┐
│ ADD INTO PRESSURE       │  ⌐ STEP1
│ VESSEL RAW MATERIAL,    │
│ OXYGEN-CONTAINING       │
│ COMPOUND ;              │
│ AND REACTION            │
│ PROMOTING MEDIUM,       │
│ CATALYST, NUCLEATING    │
│ SUBSTANCE AS NEEDED     │
└─────────────────────────┘
            │
            ▼
┌─────────────────────────┐
│ HEATING AND             │  ⌐ STEP2
│ PRESSURIZING REACTION   │
│ IN PRESSURE VESSEL      │
└─────────────────────────┘
            │
            ▼
┌─────────────────────────┐
│ PRODUCTION OF NANO      │  ⌐ STEP3
│ CARBON MATERIAL         │
└─────────────────────────┘
```

# FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1300364 A
- JP H6157016 A
- JP 2000095509 A
- JP H9188509 A
- JP H10273308 A
- JP 2000086217 A
- US 3030187 A
- US 3030188 A
- JP H5186865 A
- JP H656414 A
- JP H632606 A

**Non-patent literature cited in the description**

- *Carbon,* 1998, vol. 36 (7-8), 937-942
- *Journal of Materials Research Society,* 2000, vol. 15 (12), 2591-2594
- *Journal of American Chemical Society,* 2001, vol. 123 (4), 741-742
- *Carbon,* 2002, vol. 40, 2961-2973
- **KOGYO ZAIRYO.** *Industrial Materials,* 2003, vol. 51 (1), 38-41
- *Nature,* 1955, vol. 176, 51
- *J. Cryst. Growth,* 1981, vol. 52, 219
- *J. Appl. Phys.,* 1982, vol. 21, L183